# EUROPEAN PATENT APPLICATION

(11) **EP 2 202 665 A1**
(43) Date of publication of application: **30.06.2010**
(21) Application number: 09179143.4
(22) Date of filing: 14.12.2009
(51) Int. Cl.: G06F 21/24

(54) **Method to generate digital signature, print controlling terminal, and image forming apparatus**

(30) Priority: 24.12.2008 KR 20080133040
(71) Applicant: SAMSUNG ELECTRONICS CO., LTD., Suwon-si, Gyeonggi-do (KR)
(72) Inventor: Jeong, Tae-woon, Gyeonggi-do (KR); Han, Young-soo, Gyeonggi-do (KR)
(74) Representative: Walaski, Jan Filip

(57) **Abstract**

A print controlling method includes receiving a selection of at least one of XML paper specification (XPS) files, analyzing a digital signature structure of the selected XPS file, generating a digital signature of the XPS file according to the analyzed digital signature structure, and storing the XPS file in which the digital signature is generated. Accordingly, a user can easily generate a digital signature for a previously generated XPS file.

## Description

The present invention relates to a method to generate a digital signature, a print controlling terminal, and an image forming apparatus, and more particularly to a method to generate a digital signature of a previously generated an XML Paper Specification (XPS) file, a print controlling terminal, and an image forming apparatus to generate the digital signature.

Image forming apparatuses generally print print data generated by terminal devices such as computers onto recording media. Examples of such image forming apparatuses include copy machines, printers, facsimile machines or multifunction peripherals (MFPs) combining functions of these machines in a single system.

Image forming apparatuses which have been widely used in recent years have an UPS emulator and thus support a printing function to print an XPS document, in addition to printing print data which are written in a conventionally used page description language (PDL) such as a post script (PS) or a printer command language (PCL).

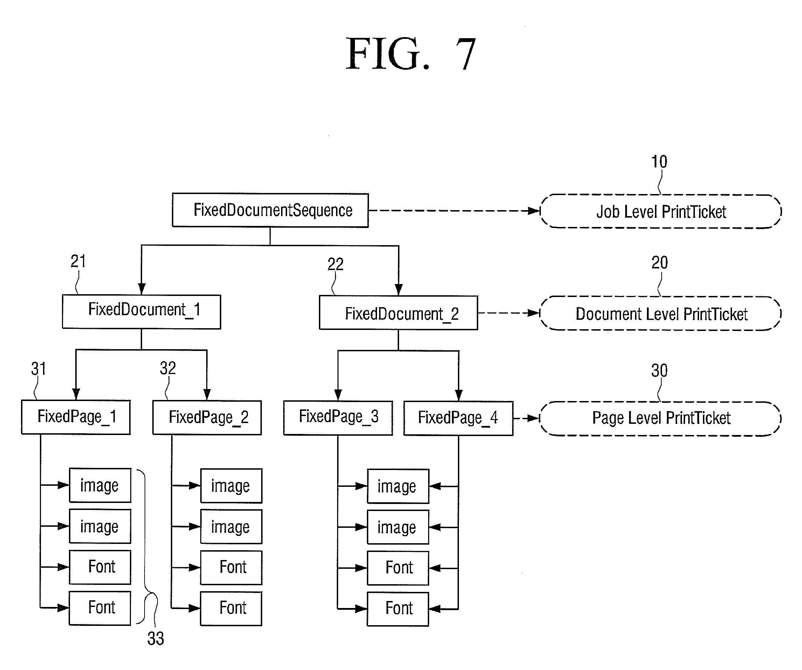

An XPS document has a fixed-layout electronic file format that preserves document formatting and can be shared, and is a zip-formatted file which includes numerous kinds of data and resources described by systematizing all resources required for documents or jobs in a directory structure and by writing the references therebetween using XML. Such an XPS document has a logical structure in the form of a tree having a plurality of layers, as illustrated in FIG. 7.

Referring to FIG. 7, an XPS document is represented with a job level 10, a document level 20 and a page level 30 in a hierarchical branching structure. The document level includes a plurality of documents, and the page level includes a plurality of pages. Different print options may be set for each of the plurality of documents and for each of plurality of pages.

A digital signature may be applied to such an XPS file. A digital signature is intended to provide the function of enabling an initial document writer to write his or her signature on a document thereby determining whether the document has been modified.

However, a user must use an application program which generates a digital signature when an XPS file is initially generated in order to apply a digital signature to an XPS file. Accordingly, there is a need for a method to generate a digital signature for an XPS file when a user generates a digital signature for an XPS file which has already been created or when it is impossible for a user to use an application program to generate a digital signature.

The present general inventive concept provides a method to generate a digital signature for a previously generated XPS file, a print controlling terminal, and an image forming apparatus to generate the digital signature.

Additional features and utilities of the present general inventive concept will be set forth in part in the description which follows and, in part, will be obvious from the description, or may be learned by practice of the general inventive concept.

Exemplary embodiments of the present general inventive concept may be achieved by providing a method to generate a digital signature, including receiving a selection of at least one XML paper specification (XPS) file, analyzing a digital signature structure of the selected XPS file, generating a digital signature of the XPS file according to the analyzed digital signature structure, and storing the XPS file in which the digital signature is generated.

The receiving a selection of an XPS file may include, if at least one command of a command to print the XPS file and a command to generate a digital signature is input, determining the command as a selection of an XPS file.

The process of analyzing a digital signature structure of the XPS file may include determining whether digital signature information is included in each job region, each document region, and each page region in the XPS file, and analyzing a structure of the digital signature information.

The method may further include displaying, through a user interface (UI), a first area to display whether a digital signature exists for each job region, each file region, and each page region in an XPS file, and a second area to receive a selection of whether to generate a digital signature for each job region, each file region, and each page region.

The generating a digital signature may further include generating a digital signature for only regions selected by a user.

The generating a digital signature may further include generating a digital signature for at least one of all regions of the XPS file, all document regions of the XPS file, all page regions of the XPS file, regions including a specific word in the XPS file, image regions in the XPS file, and some regions of a specific page in the XPS file.

The generating a digital signature may further include generating a digital signature using a certificate selected by a user.

The generating a digital signature may be performed by an XPS driver.

Exemplary embodiments of the present general inventive concept may also be achieved by providing a print controlling terminal device, including a user interface to receive a selection of at least one XML paper specification (XPS) file, an analyzer to analyze a digital signature structure of the XPS file selected through the user interface, a digital signature generator to generate a digital signature of the XPS file according to the analyzed digital signature structure, and a storage unit to store the XPS file in which the digital signature is generated.

The device may further include a controller to determine a command as a selection of an XPS file if at least one command of a command to print the XPS file and a command to generate a digital signature is input.

The analyzer may determine whether digital signature information is included in each job region, each document region, and each page region in the XPS file, and analyze a digital signature structure.

The user interface may display a first area to display whether a digital signature exists for each job region, each file region, and each page region in an XPS file, and a second area to receive a selection of whether to generate a digital signature for each job region, each file region, and each page region through a user interface (UI).

The digital signature generator may generate a digital signature for only regions selected by a user.

The digital signature generator may generate a digital signature for at least one of all regions of the XPS file, all document regions of the XPS file, all page regions of the XPS file, regions including a specific word in the XPS file, image regions in the XPS file, and some regions of a specific page in the XPS file.

The digital signature generator may generate a digital signature using a certificate selected by a user.

The digital signature generator may be operated on an XPS driver.

Exemplary embodiments of the present general inventive concept may also be achieved by providing an image forming apparatus, including a communication interface to receive an XML paper specification (XPS) file; a digital signature generator to analyze a digital signature structure of the XPS file and to generate a digital signature of the XPS file according to the analyzed digital signature structure; and a storage unit to store the XPS file in which the digital signature is generated.

The apparatus may further include a controller to receive an XPS file through the communication interface, and determines a command as a selection of an XPS file if at least one of a command to print the XPS file and a command to generate a digital signature is input.

The digital signature generator may determine whether digital signature information is included in each job region, each document region, and each page region in the XPS file, and analyzes a digital signature structure.

The apparatus may further include a user interface to display a first area to display whether a digital signature exists for each job region, each file region, and each page region in an XPS file, and a second area to receive a selection of whether to generate a digital signature for each job region, each file region, and each page region.

The digital signature generator may generate a digital signature for only regions selected by a user.

The digital signature generator may generate a digital signature using a certificate selected by a user.

Exemplary embodiments of the present general inventive concept may also be achieved by providing an apparatus to generate a digital signature of an XML paper specification (XPS) file, including a controller to determine whether the XPS file is selected, and a digital signature generator to analyze a digital signature structure of the XPS file is the XPS file is selected and to generate a digital signature of the selected XPS file.

The controller may determine that the XPS file is selected if the controller receives one of a command to print the XPS file and a command to generate a digital signature for the XPS file.

The digital signature generator may generate a digital signature for a selected region of the XPS file.

The region may be at least one of a document region of the XPS file, a page region of the XPS file, an image region of the XPS file, and a region of the XPS file having a specific word.

The apparatus may further include a communication interface in communication with the controller to receive the XPS file.

The apparatus may further include a user interface to receive a selection of the XPS file.

The apparatus may further include a storage unit to store the XPS file and the generated digital signature.

Exemplary embodiments of the present general inventive concept may also be achieved by providing a computer-readable medium having executable code stored thereon to perform a method of generating a digital signature, the method including receiving a selection of at least one XML paper specification (XPS) file; analyzing a digital signature structure of the selected XPS file; generating a digital signature of the XPS file according to the analyzed digital signature structure; and storing the XPS file in which the digital signature is generated.

These and/or other features and utilities of the present general inventive concept will become apparent and more readily appreciated from the following description of the embodiments, taken in conjunction with the accompanying drawings of which:
FIG. 1 is a block diagram illustrating a print controlling system according to an exemplary embodiment of the present general inventive concept;
FIG. 2 is a block diagram illustrating a print controlling terminal according to an exemplary embodiment of the present general inventive concept;
FIG. 3 is a block diagram illustrating an image forming apparatus according to an exemplary embodiment of the present general inventive concept;
FIGS. 4 and 5 are views illustrating various examples of a user interface (UI) window of a user interface (UI) unit according to an exemplary embodiment of the present general inventive concept;
FIG. 6 is a flowchart illustrating a print controlling method according to an exemplary embodiment of the present general inventive concept; and
FIG. 7 is a schematic view illustrating a logical structure of an XML Paper Specification (XPS) file.

Reference will now be made in detail to exemplary embodiments of the present general inventive concept, examples of which are illustrated in the accompanying drawings, wherein like reference numerals refer to the like elements throughout. The exemplary embodiments are described below in order to explain the present general inventive concept by referring to the figures.

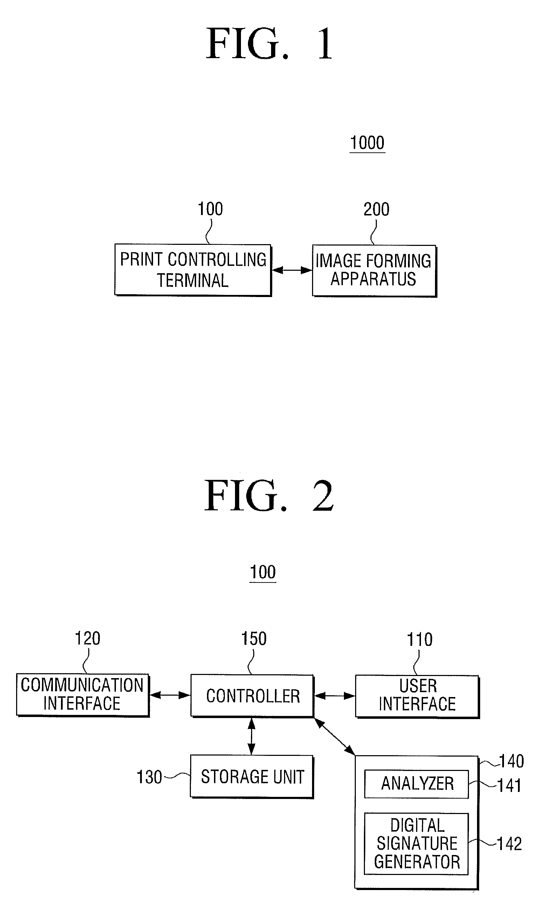

FIG. 1 is a block diagram illustrating a print controlling system according to an exemplary embodiment of the present general inventive concept. Referring to FIG. 1, a print controlling system 1000 according to an exemplary embodiment of the present general inventive concept includes a print controlling terminal 100 and an image forming apparatus 200.

The print controlling terminal 100 may receive a selection of at least one from among previously generated XPS files, analyze the structure of a digital signature from the selected XPS file, generate a digital signature of the XPS file based on the analyzed structure, and store the XPS file on which the digital signature is generated. In an exemplary embodiment, if a user inputs at least one command from among a command to print an XPS file and a command to generate a digital signature of the corresponding XPS file, the print controlling terminal 100 may determine the command as a selection of an XPS file. The structure and operations of the print controlling terminal 100 are further described with reference to FIG. 2.

FIG. 2 is a block diagram illustrating a print controlling terminal 100 according to an exemplary embodiment of the present general inventive concept. Referring to FIG. 2, the print controlling terminal 100 according to an exemplary embodiment of the present general inventive concept includes a user interface (UI) 110, a communication interface 120, a storage unit 130, a driver 140, and a controller 150.

The user interface 110 includes a plurality of function keys through which a user is able to set or select various functions supported by the print controlling terminal 100, and can display various information provided from the print controlling terminal 100. The user interface 110 may be implemented, for example, as an apparatus such as a touch pad or a touch screen in which both input and output can be implemented, or as an apparatus combining a mouse and a monitor. A user may select an XPS file that he or she desires to output using, for example, a user interface window provided by the user interface 110, and also can select whether to proceed with the process of determining if there is a specific tag, which will be explained below.

Here, the XPS file, as described above, refers to print data to which print options are set, and which is represented in the form of a tree structure having a plurality of layers. Specifically, the XPS file has a plurality of layers, in which different print options may be set for each node of layers and trees, and in which a digital signature may be set for each document, each page, and each page region. For example, referring to FIG. 7, an XPS file is represented as having a job level 10, a document level 20, and a page level 30 in a hierarchical branching structure. A digital signature may be applied to some region of an XPS file, for example, all of job region 10, some of document region 21, 22, some of page region 31, 32, some of images, specific words, and specific regions 33 of some pages.

The communication interface 120 may be connected to the image forming apparatus 200, and can provide print data which are configured in a processable form to the image forming apparatus 200. In an exemplary embodiment, the print data having a processable form in the image forming apparatus 200 may include Page Description Language (PDL) data which are written using Printer Command Language (PCL) or PostScript (PS) language and an XPS file. In more detail, the communication interface 120 may be configured, for example, as a parallel port, a universal serial bus (USB) port, a wireless module, and so on to connect the print controlling terminal 100 with an external apparatus.

The storage unit 130 can store an XPS file. The storage unit 130 may store an XPS file in which a digital signature is generated through the following operations. The storage unit 130 may be implemented as various external storage media, for example, a removable disk including a USB memory, or a network-accessible memory, such as a web server connected via a network.

The driver 140 can analyze a structure of a digital signature of a selected XPS file, and can generate a digital signature for the XPS file based on the analyzed structure. In an exemplary embodiment, as illustrated in FIG. 2, the driver 140 is represented with an analyzer 141 and a digital signature generator 142.

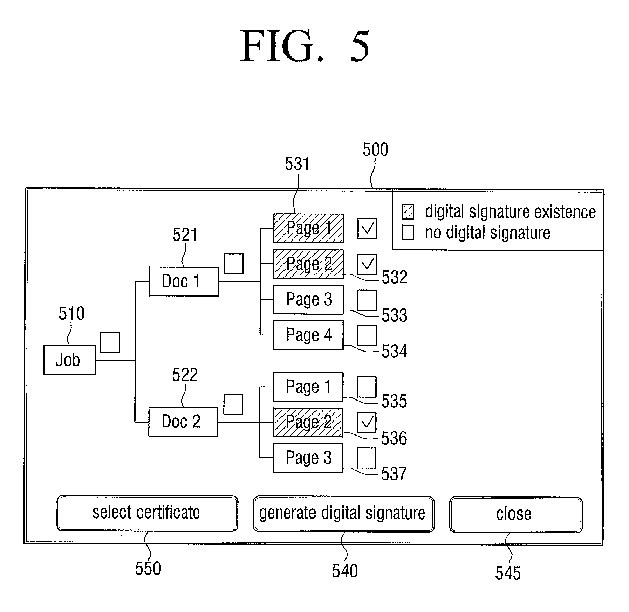

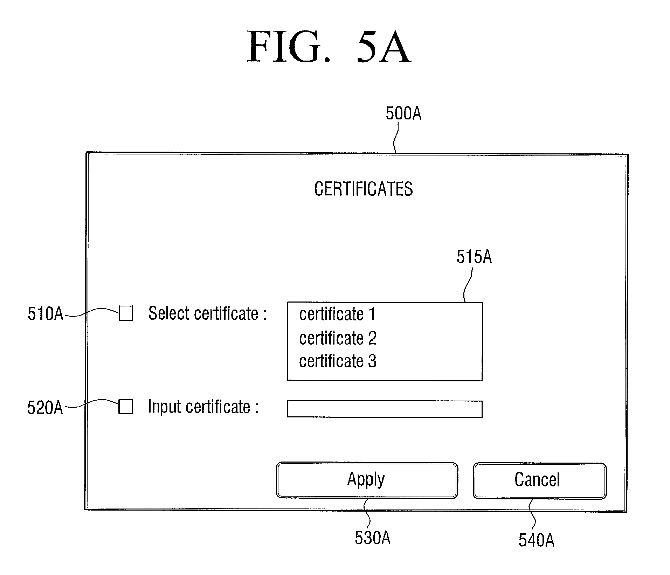

The analyzer 141 can analyze a structure of a digital signature of a selected XPS file. Specifically, the analyzer 141 can analyze a structure of a hierarchical digital signature of the corresponding XPS file by determining whether information of a digital signature is included in each job, each document, and each page in the XPS file. The structure of a digital signature analyzed through the above operations may correspond to a structure of the corresponding XPS file as illustrated in FIG. 5, or may be formed in a type of table. The analyzer 141 may analyze a structure of the selected XPS file using a digital signature filter in an XPS printer driver when being implemented.

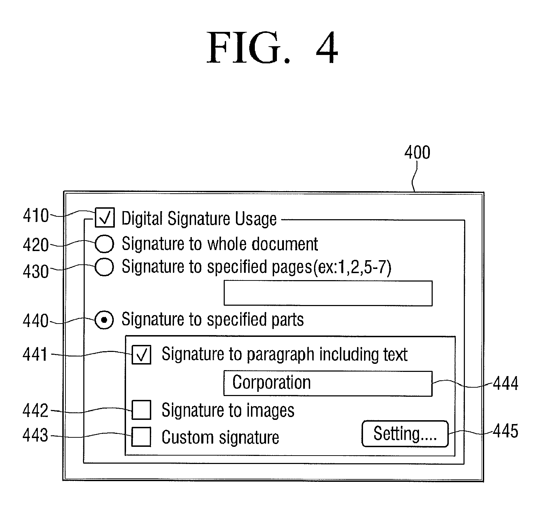

The digital signature generator 142 may generate a digital signature based on a structure of a digital signature of the analyzed XPS file. Specifically, the digital signature generator 142 may generate a digital signature for all of regions to which a digital signature is not set based on a structure of a digital signature of the analyzed XPS file, and can control the user interface 110 to display the structure of the digital signature of the analyzed XPS file to a user. By doing so, the digital signature generator 142 can generate a digital signature for at least one region selected by a user among a document region, a page region, a region including a specific word in an XPS file, an image region in an XPS file, and some region of a specific page in an XPS file. A user can be presented with information regarding the XPS file and can make selections in a UI window, exemplary embodiments of which are illustrated in FIGS. 4 and 5, and which are more fully described below.

The digital signature generator 142 may generate a digital signature for regions which are selected by a user or in which there is no digital signature using a certificate selected by the user. In more detail, a certificate having a secret code and a private key can be used to generate a digital signature in the corresponding XPS file. Such a certificate may be various kinds of certificates such as a public key certificate and a private key certificate, and can be divided according to their use and applicable range. Accordingly, the digital signature generator 142 can control the user interface 110 to display selectable certificates and can generate a digital signature using the selected certificate. Alternatively, the digital signature generator 142 may generate a digital signature using a certificate which is previously selected by a user when being implemented.

The digital signature generator 142 may also operate for regions in which a digital signature has been already generated in addition to regions in which there is no digital signature. The digital signature generator 142 can change a setup of a digital signature for the region in which a digital signature has been already generated. More specifically, if a digital signature is preset in the region which is selected by a user, the digital signature generator 142 may receive certificate information corresponding to the digital signature which is set to the corresponding region, and can change the setup of the digital signature. For example, if authority information regarding a specific user is set in the region selected by a user, the digital signature generator 142 may receive the previous certificate information and change the authority information of the specific user. The digital signature generator 142 may receive authority information corresponding to the currently set region from a user, and resolve the currently set digital signature (that is, can change the currently set digital signature according to the received authority information).

The digital signature generator 142 may set a scope of authority and duration of the digital signature regarding the corresponding XPS file. In more detail, in an exemplary embodiment a rights management services (RMS) authority (for example, Windows RMS) can be applied to an XPS file, and thus a user and duration during which the user can view or output the XPS file may be set. Accordingly, the digital signature generator 142 can control the user interface 110 to display information thereof to a user in order to set the scope of authority and the duration of a digital signature when a digital signature is generated. While the method to set the scope of authority and the duration of a digital signature is described in this exemplary embodiment of the present general inventive concept, various methods and types which can be used when a digital signature is generally generated may be applied.

The controller 150 can control the storage unit 130 to store an XPS file in which a digital signature is generated. In this situation, the controller 150 may store an XPS file with a file name different from that of the previous XPS file, or may overwrite the previous XPS file. These operations may be performed according to a user's selection or may be automatically performed without receiving any command.

If at least one command of a command to print an XPS file and a command to generate a digital signature is input through the user interface 110, the controller 150 can determine the command as a selection of an XPS file and can control the above operations to be performed. Specifically, the controller 150 can control the above operations to be performed if a command to generate a digital signature of an XPS file is input, and also the controller 150 can control the above operations to be performed if a command to print an XPS file is received through the user interface 110. In this situation, the controller 150 may transmit an XPS file in which a digital signature is generated to the image forming apparatus 200.

In an exemplary embodiment, if there is no digital signature in an XPS file, or if a digital signature is not set to some of a document region and some of a page region, the print controlling terminal 100 can provide information thereof to a user, and the user can select only the region to which the user desires to add a digital signature in an XPS file. By doing so, a digital signature can be easily generated.

With reference to FIG. 2, the driver 140 represents an XPS printer driver to perform an operation regarding an XPS file, and the analyzer 141 and the digital signature generator 142 described above may be implemented, for example, in a filter form in a filter pipe line of an XPS printer driver.

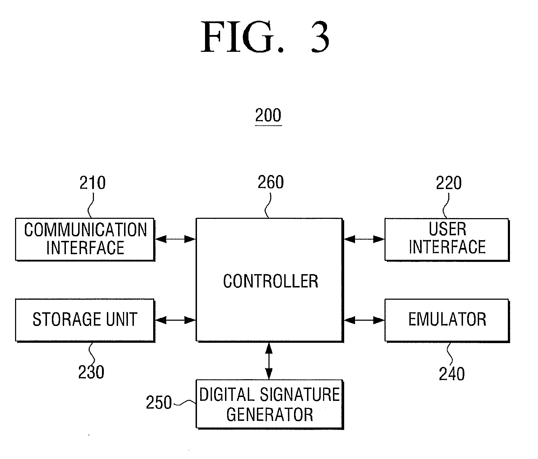

The image forming apparatus 200 can receive print data, such as an XPS document from the print controlling terminal 100, and can print the received document. Specifically, if an XPS file is received, the image forming apparatus 200 may analyze the structure of a digital signature, and can generate a digital signature of an XPS file based on the analyzed structure. The detailed structures and operations thereof will be described with reference to FIG. 3.

FIG. 3 is a block diagram illustrating the image forming apparatus 200 according to an exemplary embodiment of the present general inventive concept. Referring to FIG. 3, the image forming apparatus 200 according to an exemplary embodiment of the present general inventive concept includes a communication interface 210, a user interface 220, a storage unit 230, an emulator 240, a digital signature generator 250, and a controller 260.

The communication interface 210 may be connected to a terminal device such as a personal computer (PC), a laptop computer, a personal digital assistant (PDA), and a digital camera, and can receive an XPS file. In more detail, the communication interface 210 is configured to connect the image forming apparatus 200 with an external device, and may access the print controlling terminal 100 via a local area network (LAN) and a wide area network (WAN) and/or an internetwork, such as the Internet, or by using a direct connection such as a universal serial bus (USB) port. Additionally, the communication interface 210 may receive an XPS file using a direct printing method, or from a storage medium such as a USB memory through a USB port.

The user interface 220 may include a plurality of function keys through which a user is able to set or select various functions supported by the image forming apparatus 200. The user interface 220 can receive a command to print an XPS file and a command to generate a digital signature of the corresponding XPS file, and can display various information provided by the image forming apparatus 200. The user interface 220 may be implemented as an apparatus such as, for example, a touch pad, where both input and output can be implemented, or as, for example, an apparatus combining a mouse and a monitor. A user may select an XPS file in which the user desires to generate a digital signature using a user interface (UI) window provided by the user interface 220, and also can select a job region, a document region, a page region, a word region, an image region, or a specific region of a page in which the user desires to generate a digital signature.

The storage unit 230 may store an XPS file received from the print controlling terminal 100 through the communication interface 120 and a previously received XPS file, and may store an XPS file in which a digital signature is generated through the following operations. The storage unit 230 may be implemented as an internal storage medium in the image forming apparatus 200 or as various external storage media, for example, a removable disk including a USB memory, a storage medium connected to the print controlling terminal 100, or a network-accessible memory, such as a web server connected via a network.

The emulator 240 may perform print operations regarding an XPS file. Specifically, the emulator 240 can employ emulators corresponding to types of print data. If print data for which a print command is input is an XPS file, the emulator 240 may perform a print process of the corresponding XPS file using an XPS emulator.

The digital signature generator 250 may analyze the structure of a digital signature of an XPS file, and may generate a digital signature of an XPS file based on the analyzed structure. Specifically, the digital signature generator 250 can analyze the structure of an XPS file by determining whether an XPS file includes digital signature information for each of a job region, a document region, and a page region, and can generate a digital signature for all regions which are not selected by a user or in which there is no digital signature. The operations of the digital signature generator 250 are similar to those of the driver 140 of the print controlling terminal 100, and the digital signature generator 250 can be operated on an XPS driver similar to the driver 140. For conciseness, further detailed description thereof will be omitted.

The controller 260 can control the storage unit 230 to store an XPS file in which a digital signature is generated. In an exemplary embodiment, the controller 260 may store an XPS file with a file name different from that of the previous XPS file, or may overwrite a previous XPS file. These operations may be performed according to a user's selection or may be automatically performed without receiving any command.

The controller 260 may transmit an XPS file in which a digital signature is generated to the print controlling terminal 100. In more detail, if an XPS file is received from the print controlling terminal 100 and thus the above operations are performed, the controller 260 may transmit an XPS file in which a digital signature is generated to the print controlling terminal 100 via the communication interface 210 since it is possible to use an XPS file in which a digital signature is generated in the corresponding print controlling terminal 100. The controller 260 may transmit an XPS file in which a digital signature is generated with an initially received file name or with another file name. These operations may be performed according to a user's selection, or may be automatically performed without receiving any command.

If the controller 260 receives a command to generate a digital signature of a previously stored XPS file through the user interface 220 or the communication interface 210, the controller 260 may control the above operations to be performed. Additionally, if the controller 260 receives a command to print a previously stored XPS file through the user interface 220 or the communication interface 210, the controller 260 may also control the above operations to be performed. Specifically, since it is possible for an XPS file to be previously stored in the image forming apparatus 200, the controller 260 may control the above operations for the generation of a digital signature to be performed if a command to print an XPS file previously stored in the image forming apparatus 200 or a command to generate a digital signature is received through the user interface 220 or the communication interface 210.

For example, if a command to print an XPS file which is previously stored in the storage unit 230 of the image forming apparatus 200 is received, the controller 260 may analyze the structure of a digital signature of the previously stored XPS file, and if it is determined that a digital signature is not set in the XPS file or a digital signature is not generated in a region of the XPS file, the controller 260 may display that a digital signature is not set or is not generated to the XPS file through the user interface 220. In this situation, the controller 260 may control the user interface 220 to generate a UI window including a first area to display whether a digital signature exists for each job region, each file region, and each page region in an XPS file, and a second area to receive a selection of whether to generate a digital signature for each job region, each file region, and each page region.

In response to a user command, the controller 260 may control the digital signature generator 250 to generate a digital signature for the region selected by a user. The digital signature generator 250 may be implemented so as to receive a confirmation of whether to generate a digital signature from a user at the same time of receiving a command to print an XPS file, or so as to receive a confirmation of whether to generate a digital signature from a user at the time of completing an operation to print the corresponding XPS file. Alternatively, the digital signature generator 250 may be implemented so as to automatically generate a digital signature without receiving any confirmation.

In an exemplary embodiment, the region selected by a user may include a selection region for a layer such as a job level, a document level, and a page level, a selection region for a node of an XPS file represented in a form of a tree structure, or a selection region for a specific image, a specific word, and/or a specific page.

Accordingly, if a digital signature is not set in an XPS file or a digital signature is not set to some of a document region and some of a page region, the image forming apparatus 200 according to an exemplary embodiment of the present general inventive concept can provide information thereof to a user, and thus a user may easily generate a digital signature by selecting a region to which the user desires to add a digital signature in an XPS file.

An exemplary embodiment of the present general inventive concept to receive an XPS file through the communication interface 210 and to use the received XPS file is described with reference to FIG. 3, but this is not intended as a limitation, and exemplary embodiments of the present general inventive concept may also be implemented, for example, so as to generate a digital signature for an XPS file which is previously stored in the storage unit 230 of the image forming apparatus 200.

Also, while the form in which the image forming apparatus 200 is connected to the print controlling terminal 100 to operate is described in an exemplary embodiment of the present general inventive concept, this is not intended as a limitation thereto, and the image forming apparatus 200 may, for example, be connected to a conventional print controlling terminal to operate, or the print controlling terminal 100 may also be connected to a conventional image forming apparatus to operate. That is, the print controlling terminal 100 and the image forming apparatus 200 may independently operate.

FIG. 4 is a view illustrating a user interface (UI) window to be displayed on an image forming apparatus 200 or a print controlling terminal 100 according to an exemplary embodiment of the present general inventive concept.

Referring to FIG. 4, a UI window 400 displays an option window through which a user can select whether to generate a digital signature for a region of a current XPS file. The option window may include a first check box 410 to select whether to generate a digital signature, a first option button 420 to generate a digital signature for an entire XPS file, a second option button 430 to generate a digital signature for a specific page, and a third option button 440 to generate a digital signature for a region including a specific condition.

Specifically, in the first check box 410 to select whether to generate a digital signature, a user can select whether to generate a digital signature for the corresponding XPS file.

In the first option button 420 to generate a digital signature for an entire XPS file, a user can select whether to generate a digital signature for all regions in which there is no digital signature.

In the second option button 430 to generate a digital signature for a specific page, a user can select whether to generate a digital signature for a desired page. For example, if a user inputs the page numbers "1, 2, 5 - 7" in the corresponding text box, a digital signature may be generated for only pages 1, 2, and 5 to 7.

In the third option button 440 to generate a digital signature for a region including a specific condition, a user can select whether to generate a digital signature for a page or a region including a specific condition. As illustrated in FIG. 4, the third option button 440 may include additional options which a user may select including a second check box 441 to generate a digital signature for a region including a specific word, a third check box 442 to generate a digital signature for an image region, and a third check box 443 to generate a custom digital signature for a region of page.

The second check box 441 to generate a digital signature for a region including a specific word is an option to generate a digital signature for a region including a word input by a user. For example, if a user inputs the word "Corporation" in text box 444 as illustrated in FIG. 4, a digital signature may be generated for all regions including the word "Corporation." Alternatively, a digital signature may be generated for a page or for all pages including the corresponding word.

The third check box 442 to generate a custom digital signature for an image region is an option to generate a digital signature for an image region in an XPS file. For example, if a user selects the option in order to prohibit changing all images because a user's signature is included in an XPS file as an image, a digital signature may be generated for all image regions in an XPS file.

The third check box 443 to generate a digital signature for a region of a page is an option to generate a digital signature for some region of page selected by a user. The region or regions may be selected by the user, for example, using the Setting button 445.

FIG. 5 is a view illustrating a user interface (UI) window to be displayed on an image forming apparatus or a print controlling terminal according to an exemplary embodiment of the present general inventive concept.

Referring to FIG. 5, a UI window 500 includes a first area to display information regarding the structure of a current XPS file and a second area to display whether information regarding a digital signature is included in each job region, each document region, and each page region in an XPS file. Specifically, a digital signature may be set for each document region and each page region in an XPS file, and the UI window 500 can display a current XPS file in a form of tree and can display an indication of whether a digital signature is set for each job region, each document region, and each page region, such as with shading as indicated by the hashed boxes illustrated in FIG. 5. For example, as illustrated in FIG. 5, a digital signature is set to a first page 531 and a second page 532 of a first document 521, and a second page 536 of a second document 522 in this exemplary embodiment of the present general inventive concept, and thus the corresponding boxes are hashed to indicate the corresponding page regions of the XPS file. Therefore, it is possible for a user to easily know which document regions and page regions include a digital signature.

If a digital signature is set as illustrated in FIG. 5, the UI window 500 may display whether a digital signature is set by hashing or shading the boxes or otherwise indicating the document regions and the page regions. Additionally, if a digital signature is set for a region of the corresponding page or a specific condition, the UI window 500 may be implemented to display information thereof. A user may input a command to generate digital signatures for selected regions which do not have digital signature information set by selecting the "generate digital signature" button 540. A user may close the UI window 500 by selecting the "close" button 545. In addition, a user may select a certificate by selecting button the select button 550. As described above, the digital signature generator 142 may generate a digital signature for regions which are selected by a user or in which there is no digital signature using a certificate selected by the user. FIG. 5A illustrates a UI window 500A in which a user can select a certificate. The UI window 500A can display selectable certificates 515A. Also, a user may input a certificate at 520A. A user may apply the selected certificate by selecting the "Apply" button 530A, and a user may cancel a selection by selecting the "Cancel" button 540A. Accordingly, the digital signature generator 142 can generate a digital signature using a selected certificate.

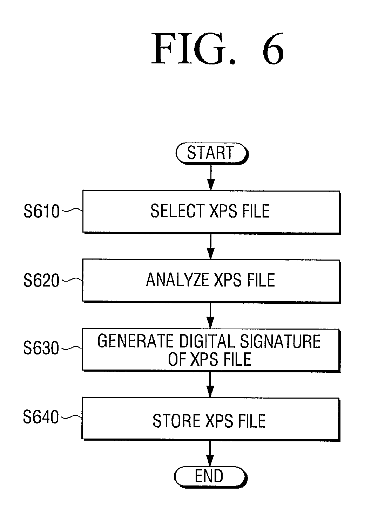

FIG. 6 illustrates a flowchart provided to explain a method to generate a digital signature according to an exemplary embodiment of the present general inventive concept.

Referring to FIG. 6, if at least one XPS file is selected in operation S610, a structure of a digital signature of the selected XPS file is analyzed in operation S620. In more detail, if a user inputs at least one command of a command to print a previously generated XPS file and a command to generate a digital signature in a previously generated XPS file, it is determined that the XPS file is selected, the structure of job, document, and page of the corresponding XPS file is analyzed, and whether a digital signature is set for each job region, each document region, and each page region is recognized. Additionally, the digital signature structure corresponding to the recognized structure of the XPS file may be analyzed using the recognized digital signature information.

If the digital signature structure of the XPS file is completely analyzed in operation S620, a digital signature may be generated based on the analyzed digital signature structure of the XPS file in operation S630. More specifically, a digital signature may be generated for regions in which a digital signature is not set or regions which are selected by a user using the analyzed digital signature structure of the XPS file. Operation S630 may be performed in the same manner as the operation of the driver 140 described above with reference to FIG. 2, so further detailed description thereof will be omitted.

An XPS file in which a digital signature is generated is stored in operation S640. In this situation, the XPS file may be stored with a file name different from that of the previous XPS file, or may overwrite the previous XPS file. These operations may be performed according to a user's selection or may be automatically performed without receiving any command. If the method to generate a digital signature is implemented to operate in the image forming apparatus, it is possible for an XPS file in which a digital signature is generated to be transmitted to the print controlling terminal.

The method to generate a digital signature according to exemplary embodiments of the present general inventive concept may provide a user with information regarding whether a digital signature is set in an XPS file, so it is possible for the user to easily generate a digital signature in an XPS file using the provided information. The method to generate a digital signature of FIG. 6 may be performed by the print controlling terminal 100 configured as illustrated in FIG. 2, or the image forming apparatus 200 configured as illustrated in FIG. 3, and may also be performed by print controlling terminals or image forming apparatuses other than the print controlling terminal 100 and the image forming apparatus 200 according to the exemplary embodiments of the present general inventive concept.

The present general inventive concept can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in distributed fashion. The computer-readable transmission medium can transmit carrier waves and signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present invention have been shown and described, it will be appreciated by those skilled in the art that changes may be made in these embodiments without departing from the principles of the invention, the scope of which is defined in the appended claims.

## Claims

1. A method to generate a digital signature, comprising:
receiving a selection of at least one XML paper specification (XPS) file;
analyzing a digital signature structure of the selected XPS file;
generating a digital signature of the XPS file according to the analyzed digital signature structure; and
storing the XPS file in which the digital signature is generated.

2. The method of claim 1, wherein the receiving a selection of an XPS file further comprises:
if at least one of a command to print the XPS file and a command to generate a digital signature is input determining the command as a selection of an XPS file.

3. The method of claim 1, wherein the analyzing a digital signature structure of the XPS file further comprises:
determining whether digital signature information is included in each job region, each document region, and each page region in the XPS file, and analyzing a structure of the digital signature information.

4. The method of claim 1, further comprising:
displaying through a user interface (UI) a first area to display whether a digital signature exists for each job region, each file region, and each page region in an XPS file, and a second area to receive a selection of whether to generate a digital signature for each job region, each file region, and each page region.

5. The method of claim 4, wherein the generating a digital signature further comprises:
generating a digital signature for only regions selected by a user.

6. The method of claim 1, wherein the generating a digital signature further comprises:
generating a digital signature for at least one of all regions of the XPS file, all document regions of the XPS file, all page regions of the XPS file, regions including a specific word in the XPS file, image regions in the XPS file, and some regions of a specific page in the XPS file.

7. The method of claim 1, wherein the generating a digital signature further comprises:
generating a digital signature using a certificate selected by a user.

8. The method of claim 1, wherein the generating a digital signature is performed by an XPS driver.

9. A print controlling terminal device, comprising:
a user interface to receive a selection of at least one XML paper specification (XPS) file;
an analyzer to analyze a digital signature structure of the XPS file selected through the user interface;
a digital signature generator to generate a digital signature of the XPS file according to the analyzed digital signature structure; and
a storage unit to store the XPS file in which the digital signature is generated.

10. The device of claim 9, further comprising:
a controller to determine a command as a selection of an XPS file if at least one of a command to print the XPS file and a command to generate a digital signature is input.

11. The device of claim 9, wherein the analyzer determines whether digital signature information is included in each job region, each document region, and each page region in the XPS file, and analyzes a digital signature structure.

12. The device of claim 9, wherein the user interface displays a first area to display whether a digital signature exists for each job region, each file region, and each page region in an XPS file, and a second area to receive a selection of whether to generate a digital signature for each job region, each file region, and each page region.

13. The device of claim 12, wherein the digital signature generator generates a digital signature for only regions selected by a user.

14. The device of claim 9, wherein the digital signature generator generates a digital signature for at least one of all regions of the XPS file, all document regions of the XPS file, all page regions of the XPS file, regions including a specific word in the XPS file, image regions in the XPS file, and some regions of a specific page in the XPS file.

15. The device of claim 9, wherein the digital signature generator generates a digital signature using a certificate selected by a user.
